# EUROPÄISCHE PATENTSCHRIFT

(11) **EP 2 679 873 B1**
(45) Veröffentlichungstag und Bekanntmachung des Hinweises auf die Patenterteilung: **31.05.2017**
(21) Anmeldenummer: 12174464.3
(22) Anmeldetag: 29.06.2012
(51) Int. Cl.: F16L 19/028

(54) **Verbindungsaggregat aus einer Kraftfahrzeugrohrleitung und einem Verbindungsfitting**
Connection device comprising a motor vehicle pipe and a connection fitting
Raccordement groupé d'une conduite de véhicule automobile et d'une pièce de raccordement

(43) Veröffentlichungstag der Anmeldung: 01.01.2014
(73) Patentinhaber: TI Automotive (Heidelberg) GmbH, 69123 Heidelberg (DE)
(72) Erfinder: Jensen, Hans, 73265 Dettingen unter Teck (DE)
(74) Vertreter: Rohmann, Michael

(56) Entgegenhaltungen:
- EP-A2- 2 434 190
- EP-A2- 2 474 768
- AU-A- 5 398 079
- GB-A- 346 032
- US-A1- 2011 169 259

## Beschreibung

Die Erfindung betrifft ein Verbindungsaggregat aus einer Kraftfahrzeugrohrleitung und einem Verbindungsfitting, wobei die Kraftfahrzeugrohrleitung ein Innenrohr aufweist. - Mit dem Begriff Kraftfahrzeugrohrleitung ist eine Rohrleitung für in Kraftfahrzeugen eingesetzte Flüssigkeiten gemeint. Bei diesen Flüssigkeiten handelt es sich insbesondere um Kraftstoffe und Hydraulikflüssigkeiten, beispielsweise um Bremsflüssigkeiten.

Verbindungsaggregate der vorstehend beschriebenen Art sind aus der Praxis in unterschiedlichen Ausführungsformen bekannt. So ist beispielsweise aus DE 102 15 169 A1 eine Kraftfahrzeugrohrleitung bekannt, die ein Innenrohr aus Stahl aufweist, sowie eine auf dem Innenrohr aufgebrachte dünne Aluminiumbeschichtung. Auf der dünnen Aluminiumbeschichtung befindet sich eine aufextrudierte Polyamidschicht. Diese Kraftfahrzeugrohrleitung ist an Verbindungsfittinge anschließbar. - Bei vielen bekannten Verbindungsaggregaten der eingangs genannten Art lässt die Korrosionsbeständigkeit zu wünschen übrig. So sind insbesondere die Verbindungsbereiche bzw. Kontaktbereiche zwischen der Kraftfahrzeugrohrleitung und dem Verbindungsfitting korrosionsgefährdet, beispielsweise gegenüber korrodierenden Flüssigkeiten wie Wasser oder wässrigen Salzlösungen. Nachteilhaft an vielen bekannten Verbindungsaggregaten der eingangs beschriebenen Art ist auch, dass sie langfristig keine ausreichende Widerstandsfähigkeit gegenüber mechanischen Einflüssen aufweisen. Ein ähnliches Verbindungsaggregat ist auch aus der US2011/0169259 bekannt. Demgegenüber liegt der Erfindung das technische Problem zugrunde, ein Verbindungsaggregat der eingangs genannten Art anzugeben, bei dem die vorstehend beschriebenen Nachteile vermieden werden können.

Zur Lösung dieses technischen Problems lehrt die Erfindung ein Verbindungsaggregat aus einer Kraftfahrzeugrohrleitung und einem Verbindungsfitting, wobei die Kraftfahrzeugrohrleitung ein Innenrohr aus Aluminium aufweist, wobei der Verbindungsfitting mit dem Innenrohr aus Aluminium in Kontakt steht und wobei zumindest die Oberfläche des Verbindungsfittings zumindest im Bereich der Kontaktfläche bzw. der Kontaktflächen zwischen Verbindungsfitting und Innenrohr aus Aluminium besteht.

Wie oben bereits dargelegt meint Kraftfahrzeugrohrleitung insbesondere eine Rohrleitung für Kraftstoffe und Hydraulikflüssigkeiten, beispielsweise Bremsflüssigkeit. Statt des Begriffes Kraftfahrzeugrohrleitung wird nachfolgend auch kurz der Begriff Rohrleitung verwendet. - Es liegt im Rahmen der Erfindung, dass an der Kontaktfläche bzw. an den Kontaktflächen zwischen Verbindungsfitting und Innenrohr Aluminiumoberflächen von Innenrohr einerseits und von Verbindungsfitting andererseits in Kontakt bzw. in Berührungskontakt miteinander stehen. Es findet hier also gleichsam ein Aluminium-Aluminium-Kontakt statt.

Nach besonders bevorzugter Ausführungsform der Erfindung ist das Innenrohr der Rohrleitung ein doppelt gerolltes Rohr. Es liegt im Rahmen der Erfindung, dass bei der Herstellung eines solchen doppelt gerollten Rohres ein Aluminiumstreifen mit der Maßgabe zu dem Rohr aufgerollt wird, dass zwei übereinander angeordnete Lagen bzw. Aluminiumlagen resultieren. Vorzugsweise werden die einander zugewandten Oberflächen der Lagen bzw. Aluminiumlagen miteinander verlötet. Zweckmäßigerweise ist hierzu ein Lotmaterial auf einer Oberfläche des Aluminiumstreifens angeordnet. - Nach einer anderen Ausführungsform der Erfindung ist das Innenrohr der Rohrleitung ein einfach gerolltes Rohr. Es liegt im Rahmen der Erfindung, dass bei der Herstellung eines solchen einfach gerollten Rohres ein Aluminiumstreifen mit der Maßgabe zu dem Rohr gerollt wird, dass die Rohrwandung aus lediglich einer Lage bzw. Aluminiumlage besteht. Zweckmäßigerweise werden die Längskanten dieses gerollten Aluminiumstreifens miteinander verschweißt, so dass bevorzugt ein auf Längsnaht stumpf verschweißtes Rohr resultiert.

Dass das Innenrohr aus Aluminium besteht, meint im Rahmen der Erfindung, dass das Innenrohr aus reinem Aluminium bzw. im Wesentlichen aus reinem Aluminium besteht oder dass das Innenrohr aus einer als Hauptbestandteil Aluminium aufweisenden Aluminiumlegierung besteht. Es liegt dabei im Rahmen der Erfindung, dass die Aluminiumlegierung mindestens 80 Gew.-% und bevorzugt mindestens 85 Gew.-% Aluminium aufweist. Gemäß besonders empfohlener Ausführungsform der Erfindung besteht das Innenrohr aus einer Aluminiumlegierung bzw. im Wesentlichen aus einer Aluminiumlegierung, die zumindest 90 Gew.-% Aluminium enthält. Besonders hat sich im Rahmen der Erfindung die Aluminiumlegierung EN AW 2017 A bewährt. Diese Aluminiumlegierung wird auch für die Herstellung von Luftfahrtkomponenten eingesetzt. Vorzugsweise gelten die vorstehend aufgeführten, das reine Aluminium oder die Aluminiumlegierung betreffenden Merkmale auch für den Verbindungsfitting bzw. für die aus Aluminium bestehenden Oberflächen/Bereiche des Verbindungsfittings.

Empfohlenermaßen ist das Innenrohr der Rohrleitung aus einem Aluminiumstreifen gerollt, der eine Dicke von 0,3 bis 0,5 mm, bevorzugt von 0,35 bis 0,45 mm aufweist. Besonders bevorzugt ist eine Dicke des Aluminiumstreifens von 0,37 bis 0,42 mm. - Es hat sich als vorteilhaft erwiesen, dass das Innenrohr eine Dicke von 0,6 bis 1 mm, bevorzugt von 0,7 bis 0,9 mm und besonders bevorzugt von 0,75 bis 0,85 mm aufweist.

Eine empfohlene Ausführungsform der Erfindung ist dadurch gekennzeichnet, dass auf die Außenoberfläche des Innenrohres eine Kunststoffbeschichtung, insbesondere eine Beschichtung aus Polyamid aufgebracht ist. Diese Kunststoffbeschichtung bildet dann vorzugsweise ein Außenrohr bzw. das Außenrohr der Rohrleitung. Bei dem bevorzugt eingesetzten Polyamid handelt es sich zweckmäßigerweise um Polyamid 12. Es liegt im Rahmen der Erfindung, dass an den Kontaktflächen zwischen Verbindungsfitting und Innenrohr keine Kunststoffbeschichtung vorhanden ist bzw. dass die Kunststoffbeschichtung hier vom Innenrohr entfernt wurde. Hier stehen also Aluminiumoberflächen ohne zwischengeschaltete Kunststoffbeschichtung in Kontakt miteinander. Vorzugsweise beträgt die Dicke der Kunststoffbeschichtung 35 bis 120 µm, bevorzugt 40 bis 100 µm. Nach einer besonders bevorzugten Ausführungsform beträgt die Dicke der Kunststoffbeschichtung zumindest 40 µm.

Empfohlenermaßen weist die Rohrleitung an zumindest einem Rohrleitungsende einen Bördel auf. Es liegt im Rahmen der Erfindung, dass es sich dabei um einen Bördel aus Aluminium handelt, der an die Rohrleitung bzw. an das Innenrohr angeschlossen bzw. angeformt ist. Zweckmäßigerweise ist ein Verbindungsfitting des Verbindungsaggregates im Bereich des Bördels bzw. am Bördel der Rohrleitung angeordnet. Es liegt weiterhin im Rahmen der Erfindung, dass beim Ausbilden eines Bördels an einem Rohrleitungsende der Rohrleitung die bevorzugt vorgesehene Kunststoffbeschichtung in diesem Bereich entfernt wird. Auf diese Weise kann es dann zu einem Aluminium-Aluminium-Kontakt zwischen Bereichen der Rohrleitung bzw. des Rohrleitungsendes und Bereichen des Verbindungsfittings kommen. Zweckmäßigerweise handelt es sich bei dem Bördel um einen F-Bördel oder um einen E-Bördel.

In besonders vorteilhafter Ausgestaltung der Erfindung weist der Verbindungsfitting eine Bohrung auf, welche Bohrung von der Rohrleitung durchfasst wird und ein Stirnende und/oder eine Anschlagfläche des Verbindungsfittings liegt an dem Bördel bzw. an der Bördelrückseite des Bördels der Rohrleitung an. Bei der Bohrung des Verbindungsfittings handelt es sich bevorzugt um eine sich in Längsrichtung des Verbindungsfittings erstreckende Axialbohrung. Es liegt im Rahmen der Erfindung, dass zumindest das Stirnende und/oder die Anschlagfläche des Verbindungsfittings aus Aluminium besteht bzw. eine Beschichtung aus Aluminium aufweist. Insoweit kommt es insbesondere zu einem Kontakt der Aluminiumoberfläche der Bördelrückseite des Bördels mit der Aluminiumoberfläche des Stirnendes und/oder der Anschlagfläche des Verbindungsfittings. Grundsätzlich kann aber auch - insbesondere zusätzlich - eine Aluminiumoberfläche der Bohrung bzw. Axialbohrung des Verbindungsfittings mit einer Aluminiumoberfläche des Innenrohres in Kontakt stehen. Auch auf diese Weise kann also ein Aluminium-Aluminium-Kontakt zwischen Innenrohr und Verbindungsfitting zustande kommen.

Es liegt im Rahmen der Erfindung, dass der Verbindungsfitting ein Schraubfitting ist und insbesondere ein Schraubfitting mit einem Außengewinde ist. Nach einer anderen Ausführungsform kann es sich bei dem Verbindungsfitting auch um eine Schraubenmutter mit einem Innengewinde handeln. Grundsätzlich kann der Verbindungsfitting auch ein zwischen zwei Rohrleitungsenden bzw. zwischen zwei an den Rohrleitungsenden vorgesehenen Bördeln angeordnetes Distanzelement sein. Zweckmäßigerweise ist die gesamte Oberfläche des Verbindungsfittings mit Aluminium beschichtet oder der gesamte Verbindungsfitting besteht aus Aluminium bzw. im Wesentlichen aus Aluminium.

Der Erfindung liegt die Erkenntnis zugrunde, dass sich ein erfindungsgemäßes Verbindungsaggregat durch eine hervorragende Korrosionsbeständigkeit auszeichnet. Diese Korrosionsbeständigkeit ist insbesondere im Bereich bzw. im Verbindungsbereich zwischen Verbindungsfitting und Kraftfahrzeugrohrleitung gegeben, und zwar auch bei längerer Einwirkung von korrosiven Medien wie Wasser oder wässrigen Salzlösungen. Die Verwendung von Aluminium für die Komponente des Verbindungsaggregates und insbesondere für die Rohrleitung bedingt außerdem eine vorteilhafte Gewichtsreduktion im Vergleich zu den aus dem Stand der Technik bekannten Komponenten. Weiterhin zeichnet sich vor allem die Verbindung zwischen Verbindungsfitting und Kraftfahrzeugrohrleitung auch langfristig durch eine überraschend hohe mechanische Widerstandsfähigkeit aus. Zu betonen ist auch, dass ein erfindungsgemäßes Verbindungsaggregat einfach und wenig aufwendig bzw. wenig kostenaufwendig realisierbar ist.

Nachfolgend wird die Erfindung anhand einer lediglich ein Ausführungsbeispiel darstellenden Zeichnung näher erläutert. Es zeigen in schematischer Darstellung:
- Fig. 1: eine Ansicht eines erfindungsgemäßen Verbindungsaggregates aus einer Kraftfahrzeugrohrleitung und einem Verbindungsfitting,
- Fig. 2: einen Schnitt durch die Kraftfahrzeugrohrleitung des erfindungsgemäßen Verbindungsaggregates und

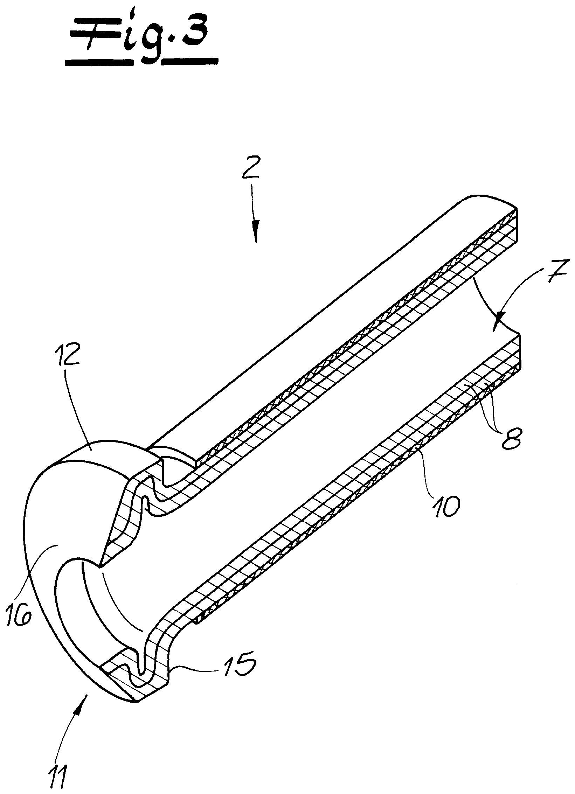

- Fig. 3: eine perspektivische Ansicht der Kraftfahrzeugrohrleitung.

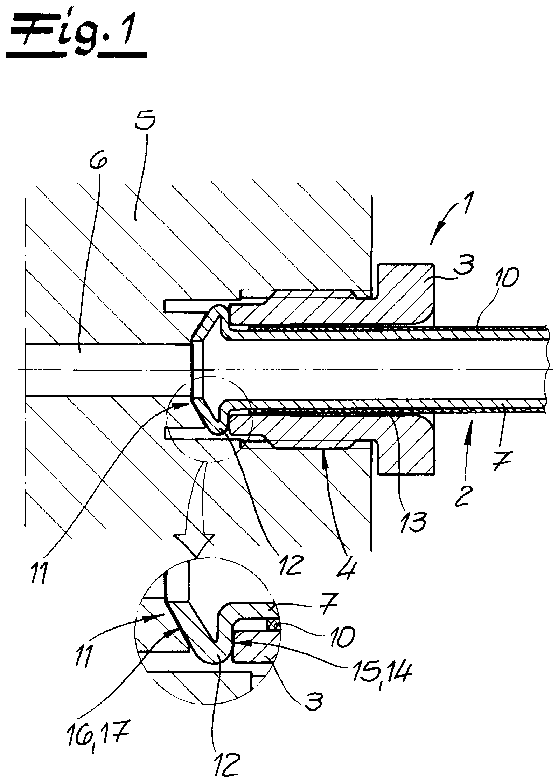

Fig. 1 zeigt ein erfindungsgemäßes Verbindungsaggregat 1 aus einer Kraftfahrzeugrohrleitung 2 und einem Verbindungsfitting, wobei der Verbindungsfitting vorzugsweise und im Ausführungsbeispiel als Schraubfitting 3 mit einem Außengewinde 4 ausgebildet ist. Der Schraubfitting 3 ist im Ausführungsbeispiel gemäß Fig. 1 in ein als Anschlussblock 5 ausgebildetes Anschlusselement eingeschraubt. Der Anschlussblock 5 weist im Ausführungsbeispiel eine integrierte zweite Rohrleitung 6 auf.

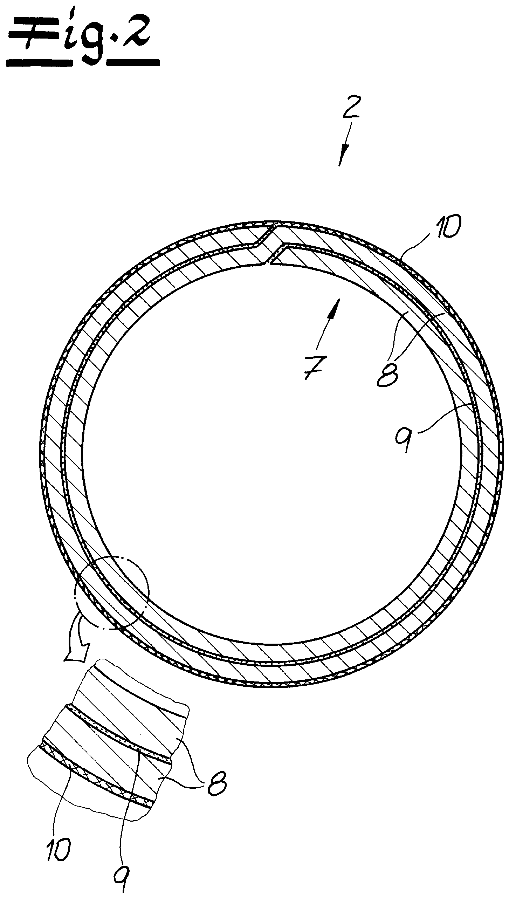

Erfindungsgemäß weist die Kraftfahrzeugrohrleitung 2 ein Innenrohr 7 aus Aluminium auf. Vorzugsweise und im Ausführungsbeispiel handelt es sich bei dem Innenrohr 7 um ein doppelt gerolltes Rohr aus Aluminium. Bei der Herstellung dieses Innenrohres 7 wird ein Aluminiumstreifen 8 mit der Maßgabe aufgerollt, dass im fertigen Innenrohr zwei Lagen bzw. Aluminiumlagen übereinander angeordnet sind (siehe insbesondere Fig. 2). Dabei werden zweckmäßigerweise die beiden gegenüberliegenden Oberflächen der Aluminiumlagen mit Hilfe eines Lotmaterials 9 miteinander verlötet bzw. umlaufend verlötet. Die Dicke des Aluminiumstreifens 8 mag im Ausführungsbeispiel 0,395 mm betragen.

Bevorzugt und im Ausführungsbeispiel ist auf die Außenoberfläche des Innenrohres 7 eine Kunststoffbeschichtung 10 aufgebracht. Empfohlenermaßen besteht diese Kunststoffbeschichtung aus einem Polyamid und besonders bevorzugt aus Polyamid 12. Die Dicke der Kunststoffbeschichtung 10 mag im Ausführungsbeispiel 70 µm betragen.

Die Kraftfahrzeugrohrleitung 2 weist an ihrem Rohrleitungsende 11 einen Bördel 12 auf, der im Ausführungsbeispiel als F-Bördel ausgebildet ist. Der Bördel 12 ist an die Kraftfahrzeugrohrleitung 2 bzw. an das Innenrohr 7 angeformt und besteht somit ebenfalls aus Aluminium. Im Bereich des Bördels 12 ist die äußere Kunststoffbeschichtung 10 der Kraftfahrzeugleitung 2 entfernt, so dass hier die Aluminiumoberfläche gleichsam freiliegt.

An dem Bördel 12 steht der als Schraubfitting 3 ausgebildete Verbindungsfitting mit dem Innenrohr 7 aus Aluminium in Kontakt. Vorzugsweise und im Ausführungsbeispiel besteht der Verbindungsfitting bzw. Schraubfitting 3 aus Aluminium. Der Schraubfitting 3 weist eine Axialbohrung 13 auf, die von der Kraftfahrzeugrohrleitung 2 durchfasst wird. Das Stirnende 14 des Schraubfittings 3 liegt an dem Bördel 12 bzw. an der Bördelrückseite 15 des Bördels 12 an. Hier findet sich also eine Kontaktfläche bzw. Kontaktflächen eines unmittelbaren Kontaktes zwischen Schraubfitting 3 und Innenrohr 7, so dass hier die Aluminiumoberflächen von Schraubfitting 3 und Innenrohr 7 direkt aneinanderliegen. Der Schraubfitting 3 drückt im Übrigen den Bördel 12 mit seiner stirnseitigen Dichtfläche 16 an eine Anschlussfläche 17 des Anschlussblockes 5.

## Patentansprüche

1. Verbindungsaggregat (1) aus einer Kraftfahrzeugrohrleitung (2) und einem Verbindungsfitting, wobei die Kraftfahrzeugrohrleitung (2) ein Innenrohr (7) aus Aluminium aufweist, wobei der Verbindungsfitting mit dem Innenrohr in Kontakt steht und wobei zumindest die Oberfläche des Verbindungsfittings zumindest im Bereich der Kontaktfläche bzw. der Kontaktflächen zwischen Verbindungsfitting und Innenrohr (7) aus Aluminium besteht, wobei die Rohrleitung (2) an zumindest einem Rohrleitungsende (11) einen Bördel (12) aufweist, und der Verbindungsfittung eine Bohrung aufweist, welche Bohrung von der Rohrleitung (2) durchfasst wird und wobei ein Stirnende (14) und/oder eine Anschlagfläche des Verbindungsfittings an dem Bördel (12) bzw. an der Bördelrückseite (15) des Bördels (12) anliegt und dass zumindest das Stirnende (14) des Verbindungsfittings aus Aluminium besteht bzw. eine Beschichtung aus Aluminium aufweist, **dadurch gekennzeichnet, dass** auf die Außenoberfläche des Innenrohres (7) eine Kunststoffbeschichtung (10), insbesondere eine Beschichtung aus Polyamid aufgebracht ist und dass das Innenrohr ein einfach oder doppelt gerolltes Rohr ist.

2. Verbindungsaggregat nach Anspruch 1 wobei das Innenrohr aus einer Aluminiumlegierung besteht bzw. im Wesentlichen aus einer Aluminiumlegierung besteht, die zumindest 90 Gew.-% Aluminium enthält.

3. Verbindungsaggregat nach einem der Ansprüche 2 oder 3 wobei das Innenrohr (7) aus einem Aluminiumstreifen (8) gerollt ist, der eine Dicke von 0,3 bis 0,5 mm, bevorzugt von 0,35 bis 0,45 mm aufweist.

4. Verbindungsaggregat nach Anspruch 1 wobei die Dicke der Kunststoffbeschichtung (10) 35 bis 120 µm beträgt.

5. Verbindungsaggregat nach einem der vorhergehenden Ansprüche wobei der Verbindungsfitting ein Schraubfitting (3), insbesondere ein Schraubfitting (3) mit einem Außengewinde (4) ist.

6. Verbindungsaggregat nach einem der vorhergehenden Ansprüche wobei die gesamte Oberfläche des Verbindungsfittings mit Aluminium beschichtet ist oder wobei der gesamte Verbindungsfitting aus Aluminium bzw. im Wesentlichen aus Aluminium besteht.

## Claims

1. A connection assembly (1) comprising a motor vehicle fluid line (2) and a connection fitting, wherein the motor vehicle fluid line (2) includes an inner tube (7) made of aluminum, wherein the connection fitting is in contact with said inner tube, and wherein at least the surface of the connection fitting consists of aluminum, at least in the region of the contact surface or contact surfaces, between the connection fitting and the inner tube (7), wherein the fluid line (2) has a flange (12), at least at one fluid line end (11), and the connection fitting has a hole, through which hole the fluid line (2) extends, and wherein a front end (14) and/or a stop face of the connection fitting rests against the flange (12) or against the flange rear side (15) of the flange (12), and that at least the front end (14) of the connection fitting is made of aluminum or has a coating from aluminum, **characterized in that** a plastic coating (10), in particular a coating from polyamide, is applied onto outer surface of the inner tube (7), and that the inner tube is a single- or double-rolled tube.

2. The connection assembly according to claim 1, wherein the inner tube is made of an aluminum alloy or is substantially made of an aluminum alloy that contains at least 90% by weight of aluminum.

3. The connection assembly according to any one of claims 2 or 3, wherein the inner tube (7) is rolled from an aluminum strip (8) that has a thickness of 0.3 to 0.5 mm, preferably of 0.35 to 0.45 mm.

4. The connection assembly according to claim 1, wherein the thickness of the plastic coating (10) is 35 to 120 µm.

5. The connection assembly according to any one of the preceding claims, wherein the connection fitting is a threaded fitting (3), in particular a threaded fitting (3) having an external thread (4).

6. The connection assembly according to any one of the preceding claims, wherein the entire surface of the connection fitting is coated with aluminum or wherein the entire connection fitting is made of aluminum or is substantially made of aluminum.

## Revendications

1. Ensemble raccord (1) composé d'une conduite pour véhicule automobile (2) et d'un élément de raccord, la conduite pour véhicule automobile (2) comportant un tuyau intérieur (7) en aluminium, le raccord de liaison étant contact avec le tuyau intérieur et au moins la surface supérieure du raccord de liaison étant composée d'aluminium au moins dans la zone de la surface de contact ou des surfaces de contact entre le raccord de liaison et le tuyau intérieur (7), la conduite (2) comportant sur au moins une extrémité de conduite (11) une collerette (12) et le raccord de liaison comportant un trou de passage, lequel trou de passage est englobé par la conduite (2) et une extrémité avant (14) et/ou une surface de butée du raccord de liaison venant s'appliquer sur la collerette (12) ou sur l'arrière de collerette (15) de la collerette (12) et **en ce qu**'au moins l'extrémité avant (14) du raccord de liaison est en aluminium ou comporte un revêtement d'aluminium, **caractérisé en ce qu'**un revêtement de matière plastique (10), notamment un revêtement de polyamide est appliqué sur la surface extérieure du tuyau intérieur (7) et **en ce que** le tuyau intérieur est un tuyau à simple ou double enroulement.

2. Ensemble raccord selon la revendication 1, le tuyau intérieur étant en un alliage d'aluminium ou étant pour l'essentiel en un alliage d'aluminium qui contient au moins 90 %/ poids d'aluminium.

3. Ensemble raccord selon l'une quelconque des revendications 2 ou 3, le tuyau intérieur (7) étant enroulé à partir d'un feuillard d'aluminium (8), qui comporte une épaisseur de 0,3 à 0,5 mm, de préférence de 0,35 à 0,45 mm.

4. Ensemble raccord selon la revendication 1, l'épaisseur du revêtement en matière plastique (10) étant de 35 à 120 µm.

5. Ensemble raccord selon l'une quelconque des revendications précédentes, le raccord de liaison étant un raccord à vis (3), notamment un raccord à vis (3) avec un filetage extérieur (4).

6. Ensemble raccord selon l'une quelconque des revendications précédentes, toute la surface du raccord de liaison étant revêtu d'aluminium ou tout le raccord de liaison étant en aluminium ou pour l'essentiel en aluminium.
